**Europäisches Patentamt**

**European Patent Office**

**Office européen des brevets**

(19)

(11) Veröffentlichungsnummer : **0 404 883 B1**

(12) **EUROPÄISCHE PATENTSCHRIFT**

(45) Veröffentlichungstag der Patentschrift :
02.12.92 Patentblatt 92/49

(51) Int. Cl.⁵ : **B23B 51/10**

(21) Anmeldenummer : **89911799.8**

(22) Anmeldetag : **16.10.89**

(86) Internationale Anmeldenummer :
**PCT/EP89/01224**

(87) Internationale Veröffentlichungsnummer :
**WO 90/04474 03.05.90 Gazette 90/10**

(54) **BOHR-/FASWERKZEUG.**

(30) Priorität : **17.10.88 DE 8812999 U**
**24.11.88 DE 8814843 U**

(43) Veröffentlichungstag der Anmeldung :
**02.01.91 Patentblatt 91/01**

(45) Bekanntmachung des Hinweises auf die
Patenterteilung :
**02.12.92 Patentblatt 92/49**

(84) Benannte Vertragsstaaten :
**AT BE CH DE FR GB IT LI LU NL SE**

(56) Entgegenhaltungen :
**EP-A- 0 146 030**
**WO-A-87/00100**
**DE-A- 2 236 100**
**DE-A- 3 124 532**
**DE-A- 3 610 016**

(56) Entgegenhaltungen :
**DE-C- 3 108 439**
**FR-A- 2 359 670**
**SE-B- 341 507**
**US-A- 4 533 285**

(73) Patentinhaber : **MAS MASCHINENBAU AG**
**CH-9475 Sevelen (CH)**

(72) Erfinder : **SCHMIGALLA, Christian**
**Heilbronner Str. 70**
**W-7250 Leonberg (DE)**
Erfinder : **NIGG, Leo**
**Tiergartenweg 15**
**CH-9470 Buchs (CH)**
Erfinder : **NIGG, Hansuli**
**Tiergartenweg 19**
**CH-9470 Buchs (CH)**

(74) Vertreter : **Petra, Elke, Dipl.-Ing.**
**Seidlstrasse 25**
**W-8000 München 2 (DE)**

EP 0 404 883 B1

## Beschreibung

Die Erfindung bezieht sich auf ein Bohr-/Faswerkzeug bestehend aus einem Werkzeughalter, der an seinem vorderen Ende einen Faskopf mit zwei diagonal gegenüberliegenden Fas-Schneidpartien und einen handelsüblichen Spiralbohrer mit Zylinderschaft trägt sowie entsprechenden Einstell- und Spannelementen, gemäß dem Oberbegriff des Anspruchs 1.

Die Forderung, eine Bohrung im gleichen Arbeitsgang auch zu entgraten oder mit einer Fase zu versehen, wurde im Laufe der Zeit mit einer Reihe verschiedener Werkzeugkombinationen durchgeführt. Hierfür bekannte Werkzeuge sind beispielsweise Stufenbohrer mit fester Stufenlänge, Spiralbohrer mit angeschraubten oder geklemmten Anfasringen, sowie Spiralbohrer mit abgefederten Senkhülsen. Die Fasschneiden dieser Werkzeuge sind in verschiedenen Ausführungen geschliffen oder geklemmt (siehe: DE-AS 20 62 757, DE-A-28 00 077, DE-OS 36 10 016, FR-A-2 359 670 ausgelegt.

Die moderne NC-Fertigung stellt heute in der Werkzeugplanung, -verwaltung und -bereitstellung neue Anforderungen an das entsprechende Werkzeugsystem. Diese Anforderungen sind unter anderem:
- hohe Lage- bzw. Formgenauigkeit und Oberflächengüte der zu fertigenden Bohrungen, vorzugsweise in einem Arbeitsgang,
- größere Spanraten mit Bohrern aus beschichtetem Hartmetall mit neuen Schneiden- und Spannutengeometrien,
- hohe Steifigkeit und Belastbarkeit, die die Bearbeitung mit hohen Schnittwerten ermöglichen,
- vorteilhafte Spanbildung und innere kühlmittelzuführung die selbst bei langspanenden Werkstoffen einen problemlosen Spanabfluß sicherstellen,
- modular aufgebaute Werkzeughalter mit definierten Schnittstellen, die die Werkzeugtypenvielfalt reduzieren und zu Kosteneinsparungen bei der Verwaltung, Lagerung und Beschaffung von Werkzeugen führen,
- Schnellwechselsysteme und eine einfache, zweckangepaßte Werkzeugeinstellung/-spannung, die den Arbeitsaufwand bei der Montage und Voreinstellung verringern,
- schnelle Bereitstellung von Werkzeugen mit unterschiedlichen Bohrerdurchmessern, Faswinkeln und verschiedenen Spindelaufnahmen unter Zuhilfenahme von verhältnismäßig wenigen Bauteilen.

Diese relativ umfangreichen Anforderungen werden von bekannten Werkzeugen zum Bohren und Fasen nicht erfüllt.

Die am häufigsten vorkommenden Mängel sind der Spänestau im Bereich der Fasschneiden sowie die Bereitstellung einer Vielzahl von Werkzeugen, wenn jedem Bohrdurchmesser ein Bohrer und ein Faswerkzeug zugeordnet werden muß. So zeigt die DE-OS 28 00 077 ein Bohr-/Faswerkzeug, welches aus einem Werkzeughalter besteht, welcher an seinem vorderen Ende einen Schneidkopf mit zwei diagonal gegenüberliegenden Fas-Schneidpartien und einen Spiralbohrer mit Zylinderschaft trägt an seinem hinteren Ende eine Werkzeugaufnahme mit Tiefeneinstellmöglichkeit des Bohrers aufweist. Der Schneidkopf ist am Werkzeughalter austauschbar über ein Schraubgewinde befestigt, während der Bohrer durch in die Spannuten eingreifende Halteschrauben mitgenommen bzw. drehfest fixiert wird. Der Bohrer selbst weist im wesentlichen gleiche Bohr- und Schaftdurchmesser auf. Hier muß folglich jedem Bohrdurchmesser je ein Bohrer, ein Schneidkopf und ein Werkzeughalter zugeordnet werden, was durch die Vielzahl der Werkzeugvarianten eine kostenaufwendige Werkzeugbeschaffung und eine umfangreiche Lagerhaltung bedeutet.

Aufgabe der Erfindung ist es, ein Bohr-/Faserkzeug oben genannter Gattung anzugeben, das derart verbessert ist, daß es den aufgezeigten heutigen Anforderungen an Werkzeugsysteme optimal entspricht, insbesondere keinen Spänestau erlaubt und ein modular aufgebautes Werkzeugsystem mit unkomplizierter Bereitstellung sowie kostengünstiger Beschaffung und Lagerung besitzt.

Diese Aufgabe wird durch ein Bohr-/Faswerkzeug gennanter Gattung mit den kennzeichnenden Merkmalen des Anspruchs 1 gelöst.

Weitere Ausgestaltungen sowie Ausführungsvarianten sind in den Unteransprüchen aufgezeigt.

Erfindungswesentlich ist demgemäß, daß der Zylindershaft des Spiralbohrers größer oder gleich dem bohrdurchmesser ist und mindestens eine geneigte oder gerade Spannfläche aufweist, gegen welche eine im Werkzeughalter angeordnete Spannschraube gespannt wird. Hierdurch wird der Vorteil erreicht, daß ohne jegliche Nacharbeit in dem gleichen Werkzeughalter eine ganze Palette von Bohrern mit unterschiedlichen Bohrdurchmessern aufgenommen werden kann, wobei die Spannung bzw. Mitnahme des Bohrers in einem Bereich stattfindet, in welchem keine Späne eindringen, so daß die Spannung den Spänefluß nicht behindert.

Der Faskopf des erfindungsgemäßen Werkzeuges ist dabei am Werkzeughalter um die Werkzeugachse um 360° drehbar ausgebildet, so daß für jede Bohrerstellung im aus dem Faskopf herausstehenden Bohrerbereich (L) eine für die Zerspannung günstige Stellung der Fasenschneiden einstellbar ist. Dabei kann mit Hilfe von als Indexierstifte fungierenden Mitnehmerstiften und in eine Umfangsnut des Werkzeughalters radial eingreifende Fixierschrauben des Faskopfes die Einstellung des Faskopfes auf dem Werkzeughalter vorgenommen werden. Hiermit wird sichergestellt, daß die Fasschneiden bei jeder Bohrerlängeneineinstellung auch optimal auf dem Spiralrücken des Bohrers anstehen.

Schließlich ist erfindungswesentlich, daß in einem jeden Faskopf die jeweils zwei Fas/Schneidpartien an zwei Faschneiden (4) vorgesehen sind die an den Durchmesser $d_1$ des Spiralrückens, im wesentlichen unter einem Fas- Winkel "λ" (Winkel zur Werkzeugachse) anstellbar, festgespannt angeordnet sind. Hierdurch wird der Vorteil erreicht, daß in den gleichen Werkzeughalter mit aufgesetztem Faskopf Spiralbohrer mit unterschiedlichem Bohrdurchmesser eingesetzt werden können, wobei lediglich die beiden Fasschneiden entsprechend verschoben und festgespannt werden müssen, wodurch immer eine optimale, satte Anlage der Fasschneiden auf den Spiralrücken stattfindet.

Hier wird folglich der große Vorteil erreicht, daß durch die Schwenkbarkeit bzw. Umsetzbarkeit des Faskopfes um 360° eine für die Zerspanung günstige Stellung der Fasschneiden in einem bestimmten Bereich des Spiralrückens des Bohrers erreicht werden kann. Während zudem jedem Bohrdurchmesser ein Bohrer zugeordnet ist, sind Faskopf und Werkzeughalter für eine ganze Reihe verschiedener Durchmesser geeignet, so daß mit einer geringen Anzahl von Fasköpfen und Haltern der gesamte Bohrdurchmesserbereich von 5 bis 25mm bearbeitet werden kann. Auswahlkriterium ist hier der Schaftdurchmesser des Bohrers. Dabei werden handelsübliche Bohrer ohne jegliliche Nacharbeit verwendet.

Gemäß einer Weiterbildung des Erfindungsgedankens wird die Spannung der Bohrer im Werkzeughalter über die Spannflächen durchgeführt und zwar je nachdem ob die Spannflächen gerade oder geneigt sind, mittels radialer oder entsprechend geneigter Spannschrauben. Dabei ist es sinnvoll, in axialer Richtung gesehen, jeweils zwei Spannschrauben hintereinander anzuordnen, so daß auch bei relativ stark aus dem Halter hervorgeschobenem Bohrer die Spannung am Bohrerschaft noch optimal durchgeführt werden kann.

Gemäß einer weiteren erfindungsgemäßen Ausführungsform ist von großem Vorteil, wenn am hinteren Ende des Werkzeughalters ein Schnellwechselsystem (z.B. ABS-kupplung), mit innerer kühlmittelzufuhr durch die Spindel, vorgesehen ist, wobei der Schnellwechsel manuell oder automatisch durchgeführt werden kann.

Des weiteren wirkt sich sehr vorteilhaft aus, wenn im Trennbereich zwischen Faskopf und werkzeughalter eine im wesentlichen ringförmipe Kühlmitteltasche vorgesehen ist. Beim Eintreten der Bohrer-Spiralnuten in den Bereich der Kühlmitteltasche, wie dies bei einer Bohrstellung mit geringen Bohrtiefen der Fall ist, wird das Eindringen von Spänen in diesen Bereich, nämlich zwischen Bohrer und Faskopf, durch den in Bohrrichtung unter Druck austretenden Kühlmittelfluß verhindert. Ein Spänestau wird somit auch bei Eintreten der Spiralnuten in das Innere des Faskopfes nicht stattfinden können.

Erfindungsgemäß ist des weiteren von Vorteil, wenn jeweils zwei typengleiche Fasschneiden vorgesehen sind, die jeweils zweischneidig ausgelegt sind. Diese können einen Einstellwinkel bis zu 45° aufweisen und sind, wie vorher erwähnt, an den Spiralrücken (Hinterschliff) des Bohrers anstellbar und klemmbar angeordnet.

Vorteilhaft ist des weiteren, wenn jede Fasschneide über eine an ihrer Unterseite vorgesehene Profilführung an den Spiralrückendurchmesser des Bohrers angelegt und mittels jeweils eines Klemmstückes und einer Senkschraube in der Führung gespannt ist. Über den Fasschneiden kann eine weiträumige Spantasche ausgeführt sein, wobei die Spann- und Klemmelemente der Fasschneiden auf gleicher Höhe mit diesen so ausgelegt sind, daß das jeweilige Klemmelement an einer im Spannbereich an der Längskante der Fasschneide vorgesehenen Schräg-Spannfläche aufliegt. Die Spannkraft des klemmstückes wird somit winklig, im wesentlichen unter 45°, auf die Fasschneide ausgeübt, wobei diese durch eine beispielsweise 60° - V -Führung optimal in diese Winkelführung hineingepreßt und verschiebfest blockiert wird. Gleichzeitig ist ein ungehinderter Spänefluß gesichert, indem die Spannuten auf ihrer ganzen Länge frei sind, ohne in die Spannuten eingreifende oder hineinreichende Bauteile. Zudem reichen die klemmelemente nicht über die Höhe der Fasschneide heraus, wodurch wiederum der Spanfluß nicht gehindert wird.

Besonders vorteilhaft wirkt sich des weiteren aus, wenn erfindungsgemäß ein modularer Aufbau mit definierten Schnittstellen vorgesehen ist. Die definierten Schnittstellen sind axiale und radiale Führungen bzw. toleranzmaßgenaue Fixierungen der funktionswesentlichen Bestandteile, wie Werkzeughalter, Faskopf und Werkzeugaufnahme zueinander. Mit verhältnismäßig wenigen Bauteilen und geringem Arbeitsaufwand kann hierdurch ein problemloser Zusammenbau jeder Werkzeugkombination ermöglicht werden. Es können somit Bohrdurchmesser (d), Faswinkel (λ), Bohrtiefe (L) und Einstellmaß (EM) nach einem übersichtlichen Baukastensystem mühelos an jeden Bedarfsfall angepaßt werden. Führungs und Anlageflächen der Schnittstellen ($s_1$, $s_2$) sind derart ausgelegt, daß die Bauteile leicht aufgeschoben und ebenso leicht dispositioniert werden können, wobei eine hohe Rundlauf- und Wiederholgenauigkeit der Werkzeugposition gewährleistet ist. Schließlich kann bei Verschleiß, Bruch oder Beschädigung des Werkzeuges jedes Werkzeugteil für sich oder das ganze Werkzeug schnell und problemlos (zum Teil durch Betätigung einer einzigen Spannschraube) ausgetauscht werden.

Der modulare Aufbau mit definierten Schnittstellen und innerer kühlmitterzufuhr ermöglicht einen problemlosen Zusammenbau nach einem übersichtlichen Baukastensystem, eine einwandfreie Funktion und in Verbindung mit einem Codiersystem, den Einsatz auf automatischen Fertigungssystemen.

Nachfolgend wird die Erfindung anhand von Ausführungsbeispielen unter Bezug auf die Zeichnung näher erläutert.

In der Zeichnung zeigen:

Fig.1 ein erfindungsgemäßes Bohr-/Faswerkzeug in teilweise axialem Schnitt, ohne Werkzeugschaft, mit ABS - Schnellwechselsystem, voreingestellt nach den Werkzeug-Soll-Daten d, L und $\lambda$ einer Einstelliste,

Fig.2 einen radialen Schnitt durch den Spiralbohrer des Werkzeugs mit zwei Fasschneiden, in für die Zerspanung günstigem Stellungsbereich

Fig.3 ein modular aufgebautes Bohr-/Faswerkzeug mit aufgesetztem Werkzeugschaft, innerer Kühlmittelzuführung zentral durch die Spindel oder über den Spindelflansch,

Fig.4 einen Schnitt nach den Linien IV-IV aus Fig.1, die Klemmung der Fasschneiden darstellend,

Fig.5 eine Fasschneide in Draufsicht und größerem Maßstab,

Fig.6 eine Einzelheit X aus Fig.5, mit vergrößerter Darstellung der Nebenschneide,

Fig.7 einen Schnitt nach den Linien III-III aus Fig.6, den Nebenwinkel darstellend, und

Fig.8 eine Darstellung der Stirnfläche gemäß Ansicht nach Pfeil A aus Fig.5.

Das erfindungsgemäße Bohr-/Faswerkzeug besteht aus einem handelsüblichen Spiralbohrer 1, dessen Schneiden- und Spannutengeometrie auch bei langspanenden Werkstoffen kurze Bohrspäne erzeugt, deren Abfuhr durch eine besondere Spannutenform begünstigt wird.

Für tieferen Bohrungen sind innere Kühlkanäle vorgesehen.

Die Bohrtiefe L wird mittels Stellschraube 9 eingestellt. Das Einstellmaß EM ergibt sich aus L und dem verwendeten Werkzeugschaft 5.

Die Spannung des Bohrers 1 erfolgt am Zylinders Schaft D an einer geneigten Spannfläche g mittels Spannschraube 7 (oder 8 bei geringen Bohrtiefen). Bohrer mit gerader Spannfläche werden mit Spannschraube 14, bzw. 15 bei geringen Bohrtiefen, gespannt.

Der Faskopf 2 ist für die Aufnahme zweier typengleicher Fasschneiden 4 ausgelegt, welche über eine profilangepaßte Führung am Durchmesser d1 des Spiralrückens j angelegt und mittels Klemmstück 11 und Senkschraube 12 fixiert werden.

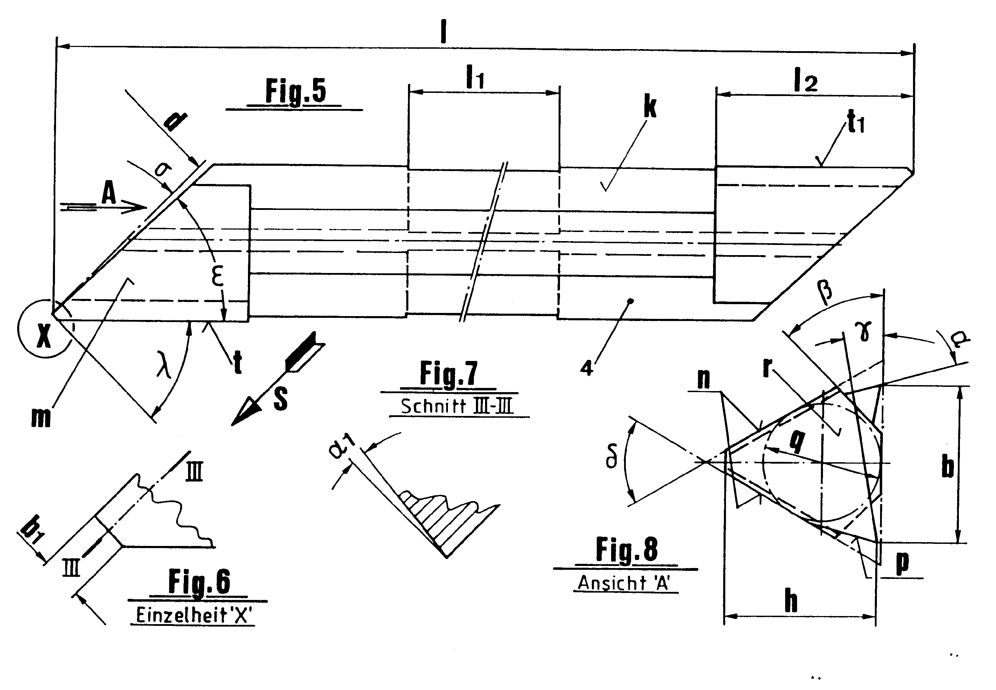

Wie dies insbesondere Fig.5 zeigt, weist die Fasschneide 4 einen länglichen Körper mit der Abmessung 1 auf, der im Querschnitt gesehen (Fig.8) nach Art eines gleichseitigen Dreiecks mit $\delta$ = 3x60° und Inkreisdurchmesser q ausgebildet ist. An beiden Enden ist der Körper an den Längsseiten gegenüberliegend mit je einer Schneidkante t und $t_1$ , mit einer Länge $l_2$ ausgestaltet. Sie bilden die Breite b der Fasschneide und haben je einen Spanwinkel $\gamma$ und einen Freiwinkel $\alpha$. Zum Schutz der Schneidkante ist die Schneidenspitze (Fig.6/Einzelheit "X") mit einer Nebenschneide $b_1$ und einem Nebenfreiwinkel $d_1$ ausgestattet.

Die unter einem Winkel $\delta$ angeordneten Anlageflächen n sind als Führungsflächen der Fasschneide ausgelegt und im mittleren Bereich mit einer Aussparung $l_1$ versehen, um eine einwandfreie Anlage zu gewährleisten.

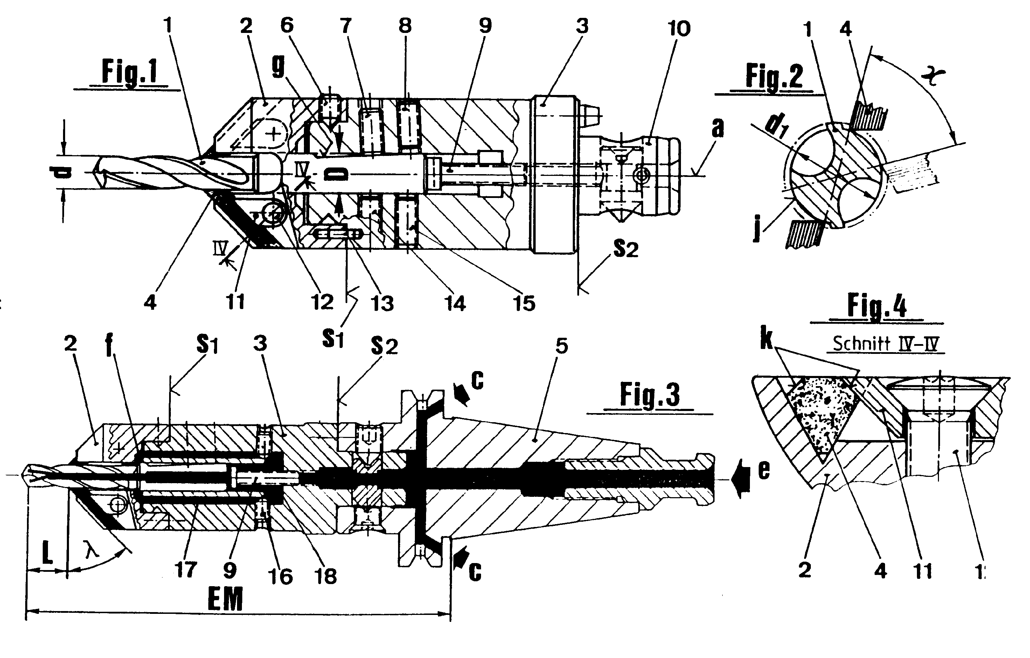

Für das Klemmstück 11 sind an den Längsseiten der Fasschneide beidseitig eine Schräg-Spannfläche k unter einem Winkel $\beta$ angeordnet, während das klemmstück selbst eine entsprechend geneigte klemmfläche (ca. 45°) aufweist (siehe insb. Fig.4). Die Fasschneiden 4 weisen zudem an ihrer Unterseite je eine V - Profil - Schrägung auf, die vorzugsweise einen V-Winkel von ca. 60° bilden. Die Fasschneide besitzt auf beiden Enden auf einem Abstand von vorzugsweise ca. 5 mm einen Schneidkeil mit Span- und Freiwinkel.

Aus der Neigung der zu fertigenden Fase ergibt sich der Faswinkel $\lambda$ . Zwischen Stirnfläche r und Bohrerdurchmesser d ist ein Winkel $\sigma$ vorgesehen, um die Anlage der Schneidspitze zu sichern. Die Summe der Winkel $\lambda + \varepsilon + \sigma$ ergibt 90°.

Der durch einen Sintervorgang geformte Fasschneiden Preßrohling wird nur an den Span- und Freiflächen nachbearbeitet und bei Bedarf beschichtet.

Bevorzugte Abmessungen der Fasschneide sind :

b = 4,0 mm, Fertigungstoleranz ±0,025

$b_1$ = ca. 0,1 mm

d = 5 - 25 mm

$d_1$ = d minus ca. 0,5 mm

h = ca. 4,05 mm

l = ca. 24 mm

$l_1$ = ca. 6 mm, 0,2 mm tief

$l_2$ = ca. 5 mm

q = $\varnothing$2,95 mm, Fertigungstoleranz ±0,05

$\alpha$ = ca. 15°

$\beta$ = ca. 45°

$\delta$ = ca. 60°

$\gamma$ = ca. 10°

x = max. 60°

$\sigma$ = max. 2°

Um eine für die Zerspanung günstige Stellung x des Bohrers 1 zu den Fasschneiden 4 zu erreichen, ist der Faskopf 2 am Werkzeughalter 3 um 360° drehbar und gleichzeitig in z.B. vierundzwanzig Stellungen indexierbar ausgeführt, wobei die Spannung in diesen Stellungen über mindestens zwei axiale Mitnehmerstifte 13 und drei in Umfangsnuten eingreifende Fixierschrauben 6 erfolgt.

Der Werkzeughalter 3 ist außer an seinem vorderen Ende zur Aufnahme des Bohrers 1 und des Faskopfes 2 und an seinem hinteren Ende mit einem Schnellwechselsystem 10 versehen, welches zentral einen ausreichenden Kühlmittelfluß zuläßt.

Im Halter 3 wird das kühlmittel gleichzeitig durch die Stellschraube 9 dem Bohrer 1 zugeführt, als auch in eine ringförmige kühlmitteltasche f geleitet. Dies geschieht über mindestens zwei axiale Kühlmittel-Verbindungsbohrungen 17, die ihrerseits mit einem in Höhe der Stellschraube 9 vorgesehenen Ringkanal 18 kommunizieren. Der Ringkanal 18 ist mit der zentralen kühlmittelzuführung e durch die Stellschraube 9 oder über verlängerte Verbindungsbohrungen 17 und weitere, nicht dargestellte, radiale Verbindungsbohrungen verbunden. Hierdurch wird beim Eintreten der Spiralnuten des Bohrers 1 in diesen Bereich, Kühlmittel mit Druck austreten und das Eindringen von Spänen verhindern.

Mit Hilfe von radialen Gewindestiften 16, die in die Bohrungen 17 reichen und drosselnd wirken, kann der Kühlmittelfluß je nach Bedarf auf Bohrer und kühlmitteltasche f verteilt, zugeführt werden. Dies ist insbesondere von Bedeutung beispielsweise bei vertikaler Arbeitsstellung und schwer zerspanbarem Werkstoff, zwecks verbesserter Späneabfuhr und Kühlung der Bohrerschneiden ausschließlich durch den Bohrer.

Bei der konstruktiven Ausführung der Komponenten wurde besonders auf eine einwandfreie Spanabfuhr geachtet. So sind die Spannuten des Bohrers 1 auf die ganze Länge frei, ohne eingreifende oder hineinragende Bauteile. Großräumig angelegte Spantaschen am Faskopf 2 haben ebene, glatte Flächen ohne vorstehende Teile. Die konstruktiven Maßnahmen zur einwandfreien Späneabfuhr in Verbindung mit der erfindungsgemäßen kühlmittelzuführung insbesondere im Fasschneidenbereich, haben in der Praxis zu guten Ergebnissen geführt.

Der modulare Aufbau des Werkzeuges mit den beschriebenen Vorzügen wird insbesondere den hohen Anforderungen, welche heute an Werkzeugsysteme für die automatisierte Fertigung gestellt werden, in optimaler Weise gerecht.

Neben den gezeigten Ausführungsbeispielen können Faskopf und Werkzeughalter derart ausgestaltet werden, daß je nach Anforderung mehrere Durchmesser, Stirnflächen und Fasen in Stufen gefertigt werden.

Bezugszeichenliste

| | |
|---|---|
| 1 - Spiralbohrer | a - Werkzeugachse |
| 2 - Faskopf | b - Breite der Fasschneide |
| 3 - Werkzeughalter | b₁ - Nebenschneide |
| 4 - Fasschneide | c - Kühlmittelzufuhr über |
| 5 - Steilkegel-**Werkzeugschaft** | den Spindelflansch |
| 6 - Fixierschraube | d - Bohrerdurchmesser |
| 7 - Spannschraube | d₁ - Spiralrücken-ø |
| 8 - 2te Spannschraube | e - Kühlmittelzufuhr durch |
| 9 - Stellschraube | die Spindel (zentral) |
| 10 - Bohr-/Faswerkzeug mit | f - Kühlmitteltasche |
| ABS-Schnellwechselsystem | g - Spannfläche/Bohrer |
| 11 - Klemmstück | h - Höhe der Fasschneide |
| 12 - Senkschraube | j - Spiralrücken/Hinter- |
| 13 - Mitnehmerstift | schliff |
| 14 - Spannschraube | k - Schräg-Spannfläche an |
| 15 - 2te Spannschraube | Fasschneide |
| 16 - Gewindestift | l - Länge der Fasschneide |
| 17 - Kühlmittel-Verbindungs- | l₁ - Aussparung |
| bohrungen | l₂ - Länge der Spanfläche |
| 18 - Ringkanal | m - Spanfläche |
| | n - Anlagefläche |
| | p - Freifläche |
| | q - Meßkreis |
| α - Freiwinkel | r - Stirnfläche |
| α₁ - Nebenfreiwinkel | s - Schnittrichtung |
| β - Spannwinkel | t, t₁ - Schneidkanten |
| γ - Spanwinkel | D - Zylinderschaft |
| δ - Winkel der Keilführung | |
| ∈ - Eckenwinkel | |
| ϰ - günstiger Stellungsbereich | |
| der Fasschneide am Spiralrücken | |
| λ - Faswinkel | |
| σ - Winkel zwischen Stirnfläche | |
| und Bohrerdurchmesser | |

6

**Patentansprüche**

1. Bohr-/Faswerkzeug, bestehend aus einem Werkzeughalter (3), der an seinem vorderen Ende einen Faskopf (2) mit zwei diagonal gegenüberliegenden Fas-Schneidpartien und einen handelsüblichen Bohrer mit Zylinderschaft trägt, sowie entsprechenden Einstell- und Spannelementen, wobei der Zylinderschaft (D) des Bohrers (1) gleich dem Bohrdurchmesser (d) ist,
   **dadurch gekennzeichnet**, daß
   - der Zylinderschaft (D) des Bohrers (1) größer oder gleich dem Bohrdurchmesser (d) ist und mindestens eine geneigte oder gerade Spannfläche (g) aufweist, gegen welche eine im Werkzeughalter angeordnete Spannschraube (7, 8 bzw. 14, 15) gespannt wird,
   - der Faskopf (2) am Werkzeughalter (3) um 360° drehbar um die Werkzeugachse (a) angeordnet ist, und
   - im Faskopf (2) die zwei Fas-Schneidpartien an Fasschneiden (4) vorgesehen sind, die an den Durchmesser (d1) des Spiralrückens (j) im Faswinkel ($\lambda$) anstellbar, gespannt angeordnet sind.

2. Bohr-/Faswerkzeug nach Anspruch 1,
   dadurch gekennzeichnet, daß im Werkzeughalter (3) Spannschrauben (7 und 8 bzw. 14 und 15) vorgesehen sind, wobei zum Spannen von Bohrern mit geneigter Spannfläche (g) ebenfalls geneigte Spannschrauben (7 und 8) und von Bohrern mit gerader Spannfläche, radial geführte Spannschrauben (14 und 15) vorgesehen sind.

3. Bohr-/Faswerkzeug nach Anspruch 1,
   dadurch gekennzeichnet, daß der Bohrdurchmesser (d) bis zu 7 mm kleiner als der Schaftdurchmesser ist und der kleinste Bohrdurchmesser (d) 5 mm beträgt und daß die Bohrtiefe (L) in einem Bereich L min.=1 bis 1,5 d und L max.= Spirallänge - d, stufenlos mittels einer axialen Stellschraube (9) einstellbar ist, wobei die Spannung des Bohrers (1) mit mindestens einer der Spannschrauben (7,8 bzw. 14, 15) durchgeführt ist.

4. Bohr-/Faswerkzeug nach Anspruch 1,
   dadurch gekennzeichnet, daß der schwenkbare Faskopf (2) mit axialen Mitnehmerstiften (13) und mit eine Umfangsnut des Werkzeughalters eingreifenden radialen Fixierschrauben (6), auf dem Werkzeughalter positionsgenau fixierbar ist.

5. Bohr-/Faswerkzeug nach Anspruch 1,
   dadurch gekennzeichnet, daß der Werkzeughalter (3) an seinem hinteren Ende ein Schnellwechselsystem (10) mit innerer Kühlmittelzufuhr durch die Spindel (e) aufweist, wobei das Schnellwechselsystem (10) manuell oder automatisch auswechselbar ausgebildet ist.

6. Bohr-/Faswerkzeug nach den Ansprüchen 1 und 5,
   dadurch gekennzeichnet, daß im vorderen Trennbereich, zwischen Faskopf (2) und Werkzeughalter (3) eine im wesentlichen ringförmige Kühlmitteltasche (f) vorgesehen ist, die ihrerseits über axiale Kühlmittel-Verbindungsbohrungen (17) einen in Höhe der Stellschraube (9) vorgesehenen Ringkanal (18) mit der zentralen Kühlmittelzufuhr (e) verbunden ist.

7. Bohr- / Faswerkzeug nach Anspruch 6,
   dadurch gekennzeichnet, daß im Werkzeughalter (3) radiale Gewindestifte (16) vorgesehen sind, die in die Bohrungen (17) hineinreichen, den Kühlmittelfluß bedarfsweise drosselnd.

8. Bohr-/Faswerkzeug nach Anspruch 1,
   dadurch gekennzeichnet, daß die zwei typengleichen Fasschneiden (4) des Faskopfes (2) jeweils zweischneidig ausgelegt sind, wobei jeweils ein Schneidkeil mit Span- und Freiwinkel vorgesehen ist und der Fasschneiden-Preßrohling nur an diesen Winkelflächen nachgearbeitet und bedarfsweise beschichtet ist.

9. Bohr-/Faswerkzeug nach den Ansprüchen 1 und 8,
   dadurch gekennzeichnet, daß eine jede der Fasschneiden (4) über eine an ihrer Unterseite vorgesehene profilangepaßte, vorzugsweise keilförmige Führung an den Durchmesser (d1) angelegt und mittels je einem nicht über die obere Schneidfläche herausragenden Klemmstück (11) und einer Senkschraube (12) in der entsprechenden Führung im Faskopf spannbar angeordnet ist.

**10.** Bohr-/Faswerkzeug nach Ansprüchen 1 bis 9,
dadurch gekennzeichnet, daß für einen ungehinderten Spänefluß die Spannuten des Bohrers auf ihrer ganzen Länge frei, ohne in die Nuten eingreifende oder hineinragende Bauteile, ausgebildet sind.

**11.** Bohr-/Faswerkzeug nach den Ansprüchen 1 bis 10,
dadurch gekennzeichnet, daß im Faskopf (2), im wesentlichen über den Fasschneiden (4), eine weiträumige Spantasche vorgesehen ist, wobei die Spann- und Klemmelemente (11 und 12) für die Fasschneiden (4) auf höchstens gleiche Höhe mit diesen so ausgelegt sind, daß die Klemmelemente (11) jeweils in einer in Spannbereich an der Längskante der Fasschneiden (4) vorgesehenen Schräg-Spannfläche (k) aufliegen.

**12.** Bohr-/Faswerkzeug nach Ansprüchen 1 und 5,
dadurch gekennzeichnet, daß ein modularer Aufbau mit definierten Schnittstellen ($s_1$ und $s_2$) vorgesehen ist, wobei in den Schnittstellen axiale und radiale Führungen bzw. maßgenaue Anlagen oder Fixierungen der aufeinandertreffenden Teile zum baukastenmäßigen Austausch der Bauteile, z.B. bei Verschleiß, Bruch, Beschädigung oder Umrüstung, vorgesehen sind.

## Claims

1. A drilling/chamfering tool, comprising a tool holder (3) which at its front end bears a chamfering head (2) with two diagonally opposed chamfering-cutting portions and a commercially available drill with a straight shank, and comprising corresponding adjusting and clamping elements, where the straight shank (D) of the drill (1) is equal to the drilling diameter (d), characterised in that
   - the straight shank (D) of the drill (1) is larger than or equal to the drilling diameter (d) and comprises at least one inclined or straight clamping surface (g) against which a tightening screw (7, 8 and 14, 15) arranged in the tool holder is clamped,
   - the chamfering head (2) is arranged on the tool holder (3) so that it can be rotated about the tool axis (a) by 360° and
   - in the chamfering head (2) the two chamfering-cutting portions are provided on chamfering blades (4) which are clamped so as to be adjustable to the diameter (d1) of the spiral land (j) at the chamfering angle ($\lambda$).

2. A drilling-chamfering tool as claimed in Claim 1, characterised in that tightening screws (7,8 and 14, 15) are provided in the tool holder (3), where inclined tightening screws (7, 8) are provided for the clamping of drills with an inclined clamping surface (g) and radially extending tightening screws (14, 15) are provided for the clamping of drills with a straight clamping surface.

3. A drilling/chamfering tool as claimed in Claim 1, characterised in that the drilling diameter (d) is up to 7 mm smaller than the shank diameter, and the smallest drilling diameter (d) amounts to 5 mm, and that the drilling depth (L) is adjustable in a range L = min = 1 to 1.5 d and L max = spiral length - d, in stepless fashion by means of an axial adjusting screw (9), where the clamping of the drill (1) is carried out using at least one of the tightenings screws (7, 8 and 14, 15).

4. A drilling/chamfering tool as claimed in Claim 1, characterised in that the swivelling chamfering head (2) can be fixed in an accurate position on the tool holder by means of axial retaining pins (13) and by means of radial fixing screws (6) which engage into a peripheral groove of the tool holder.

5. A drilling/chamfering tool as claimed in Claim 1, characterised in that at its rear end the tool holder (3) comprises a quick-change system (10) with internal coolant supply through the spindle (e), where the quick-change system (10) is designed so that it can be exchanged manually or automatically.

6. A drilling/chamfering tool as claimed in Claims 1 and 5, characterised in that in the front dividing zone, between the chamfering head (2) and the tool holder (3), is arranged a substantially ring-shaped coolant pocket (f) which is itself connected to the central coolant supply (e) via axial coolant connecting bores (17) and an annular channel (18) arranged at the level of the adjusting screw (9).

7. A drilling/chamfering tool as claimed in Claim 6, characterised in that radial threaded pins (16) are arranged in the tool holder (3), which pins (16) extend into the bores (17), if necessary throttling the flow of coolant.

8. A drilling/chamfering tool as claimed in Claim 1, characterised in that the two chamfering blades (4) of the chamfering head (2), which are of the same type, are each double edged, where a respective cutting wedge is provided with a rake- and clearance angle, and the chamfering blade blank is finished and if necessary coated only on these angled surfaces.

9. A drilling/chamfering tool as claimed in Claims 1 and 8, characterised in that each of the chamfering blades (4) is applied to the diameter (d1) via a profile-matched, preferably wedge-shaped guide arranged on its underside and is arranged so that it can be clamped in the corresponding guide in the chamfering head by means of a respective clamping component (11), which does not project beyond the upper cutting surface, and a counter sunk screw (12).

10. A drilling-chamfering tool as claimed in Claims 1 to 9, characterised in that for an unobstructed chip flow, the grooves of the drill are open along their entire length, without components engaging or projecting into the grooves.

11. A drilling-chamfering tool as claimed in Claims 1 to 10, characterised in that a spacious chip pocket is provided in the chamfering head (2), substantially above the chamfering blades (4), where the tightening- and clamping elements (11 and 12) for the chamfering blades (4) are arranged at the maximum at the same height as the latter in such manner that the clamping elements (11) are supported on a respective oblique clamping surface (k) extending along the longitudinal edge of the chamfering blades (4) in the clamping zone.

12. A drilling-chamfering tool as claimed in Claims 1 and 5, characterised in that a modular construction with defined interfaces (s1 and s2) is provided, where at the interfaces axial and radial guides and accurately dimensioned bearing surfaces or fixings for the mutually abutting components are provided, to enable a modular exchange of the components, e.g. in the case of wear, breakage, damage or retrofitting.

**Revendications**

1. Outil de perçage et de chanfreinage, constitué par un porte-outil (3) qui porte à son extrémité antérieure une tête à chanfreiner (2) ayant deux parties de lame à chanfreiner opposées en diagonale et une mèche habituelle à tige cylindrique, ainsi que par des éléments correspondants de réglage et de blocage, le diamètre de la tige cylindrique (D) du foret (1) étant égal au diamètre (d) du foret proprement dit, caractérisé en ce que :
   - le diamètre de la tige cylindrique (D) du foret (1) est plus grand ou égal au diamètre (d) du foret proprement dit et comporte au moins une surface de blocage (g) inclinée ou droite, sur laquelle est bloquée une vis de blocage (7, 8 ; 14 et 15) montée dans le porte-outil (3),
   - la tête de chanfreinage (2) est montée contre le porte-outil (3) de manière à pouvoir tourner de 360° par rapport à l'axe de l'outil (a) et
   - dans la tête de chanfreinage (2) sont prévues sur les lames à chanfreiner (4) les deux parties de lame à chanfreiner qui sont bloquées, mais dont l'angle de chanfrein (λ) peut être réglé en fonction du diamètre (d1) du dos de la gorge hélicoïdale (j).

2. Outil de perçage et de chanfreinage selon la revendication 1, caractérisé en ce que sont prévues dans le porte-outil (3) des vis de blocage (7 et 8 ; 14 et 15), étant noté que pour le blocage de forets à surface de blocage inclinée (g), on prévoit également des vis de blocage inclinées (7 et 8), alors que pour des forets à surface de blocage droite, on prévoit des vis de blocage (14 et 15) guidées radialement.

3. Outil de perçage et de chanfreinage selon la revendication 1, caractérisé en ce que le diamètre (d) du foret est jusqu'à 7 mm plus petit que celui de la tige et le plus petit diamètre du foret (d) est égal à 5 mm, alors que la profondeur du perçage (1), dans une plage L min. = 1 à 1,5 d et L max. = longueur de la gorge hélicoïdale - d, est réglable en continu à l'aide d'une vis de réglage axiale (9), et que le serrage du foret (1) est réalisé avec au moins l'une des vis de blocage (7, 8 ; 14, 15).

4. Outil de perçage et de chanfreinage selon la revendication 1, caractérisé en ce que la tête à chanfreiner basculante (2) est susceptible d'être fixée en position précise sur le porte-outil, à l'aide de chevilles axiales d'entraînement (13) et de vis radiales de fixation (6) qui s'engagent dans une gorge périphérique du porte-outil.

5. Outil de perçage et de chanfreinage selon la revendication 1, caractérisé en ce que le porte-outil (3) comporte à son extrémité postérieure un système de remplacement rapide (10) à alimentation en milieu réfrigérant à travers la broche (e), le système de remplacement rapide (10) étant réalisé pour un changement ou remplacement rapide par voie manuelle ou automatique.

6. Outil de perçage et de chanfreinage selon les revendications 1 et 5, caractérisé en ce que dans la zone antérieure de séparation, il est prévu, entre la tête à chanfreiner (2) et le porte-outil (3), une poche sensiblement annulaire (f) pour le milieu de réfrigération qui, à son tour, est reliée avec l'alimentation centrale (e) en le milieu de réfrigération, par l'intermédiaire de perçage de liaisons axiales pour le milieu de réfrigération (17) et d'un canal annulaire (18) prévu au niveau de la vis de réglage (9).

7. Outil de perçage et de chanfreinage selon la revendication 6, caractérisé en ce que dans le porte-outil (3) sont prévues des chevilles radiales filetées (16) qui pénètrent dans des perçages (17) et qui étranglent, si besoin est, le débit du milieu réfrigérant.

8. Outil de freinage et de chanfreinage selon la revendication 1, caractérisé en ce que les deux lames à chanfreiner (4) de même type de la tête à chanfreiner (2) sont chacune réalisées à doubles tranchants, un tranchant cunéiforme étant prévu avec un angle de coupe et un angle de disponible, alors que l'ébauche de la lame à chanfreiner n'est post-traitée qu'au niveau des surfaces cunéiformes et est pourvue, si besoin est, d'un revêtement.

9. Outil de perçage et de chanfreinage selon les revendications 1 et 8, caractérisé en ce que chacune des lames à chanfreiner (4) est adaptée au diamètre (d1), par l'intermédiaire d'un guidage cunéiforme, à adaptation de profil et prévu dans sa face inférieure, et elles sont disposées de manière à être bloquées dans le guidage correspondant de la tête à chanfreiner, à l'aide d'une pièce de serrage (11) qui ne déborde pas la surface de coupe supérieure et d'une vis noyée (12).

10. Outil de perçage et de chanfreinage selon les revendications 1 à 9, caractérisé en ce que pour le passage libre des copeaux, les gorges de coupe du foret sont libres sur toute leur longueur, sans aucun élément qui attaque ou qui pénètre dans les gorges.

11. Outil de perçage et de chanfreinage selon les revendications 1 à 10, caractérisé en ce qu'il est prévu dans la tête à chanfreiner (2) et sensiblement au-dessus des lames à chanfreiner (4), une large poche à copeaux, les éléments de serrage et de blocage (11 et 12) pour les lames à chanfreiner (4) sont disposés au maximum à la même hauteur que celles-ci de manière que les éléments de serrage (11) reposent, dans la zone de blocage, sur la surface de blocage oblique (k) prévue sur le bord longitudinal des lames à chanfreiner (4).

12. Outil de perçage et de chanfreinage selon les revendications 1 et 5, caractérisé en ce qu'il est prévu une constitution modulaire à emplacements de coupe déterminés (s1, s2), et qu'aux emplacements de coupe sont prévus des guidages axiaux et radiaux ou des dispositifs et moyens de fixations précises des éléments voisins pour un remplacement à système modulaire, par exemple en cas d'usure, de rupture, d'endommagement ou de transformation.

**Fig.5**

**Fig.6**
Einzelheit 'X'

**Fig.7**
Schnitt III-III

**Fig.8**
Ansicht 'A'